# EUROPEAN PATENT SPECIFICATION

(11) **EP 0 642 819 B1**
(45) Date of publication and mention of the grant of the patent: **11.12.1996**
(21) Application number: 94306717.3
(22) Date of filing: 14.09.1994
(51) Int. Cl.: B01D 39/20, C22B 9/02

(54) **Filter medium for metal hot melt and treatment process for metal hot melt**
Filter für Metallschmelzen und Verfahren zur Behandlung von Metallschmelzen
Filtre pour métal fondu et procédé de traitement du métal fondu

(30) Priority: 14.09.1993 JP 229100/93
(43) Date of publication of application: 15.03.1995
(73) Proprietor: NGK INSULATORS, LTD., Nagoya-City, Aichi Prefecture 467 (JP); NGK ADREC CO., LTD., Nagoya city, Aichi-pref 467 (JP)
(72) Inventor: Shirakawa, Hiroshi, Kagamigahara-city, Gifu-pref. 509-01 (JP); Yamakawa, Osamu, Kani-city, Gifu-pref. 509-02 (JP)
(74) Representative: Paget, Hugh Charles Edward

(56) References cited:
- EP-A- 0 029 802
- EP-A- 0 593 278
- GB-A- 1 266 500
- US-A- 5 114 882
- US-A- 5 145 806
- PATENT ABSTRACTS OF JAPAN vol. 17, no. 520 (M-1482) 20 September 1993 & JP-A-05 138 339 (NGK INSULATORS ET AL.) 1 June 1993

## Description

### BACKGROUND OF THE INVENTION

### (i) Field of the Invention

The present invention relates to a filter medium for a metal hot melt suitable for removing solid impurities from the hot melt of a metal such as aluminum by filtration, and a treatment process for the metal hot melt.

### (ii) Description of the Related Art

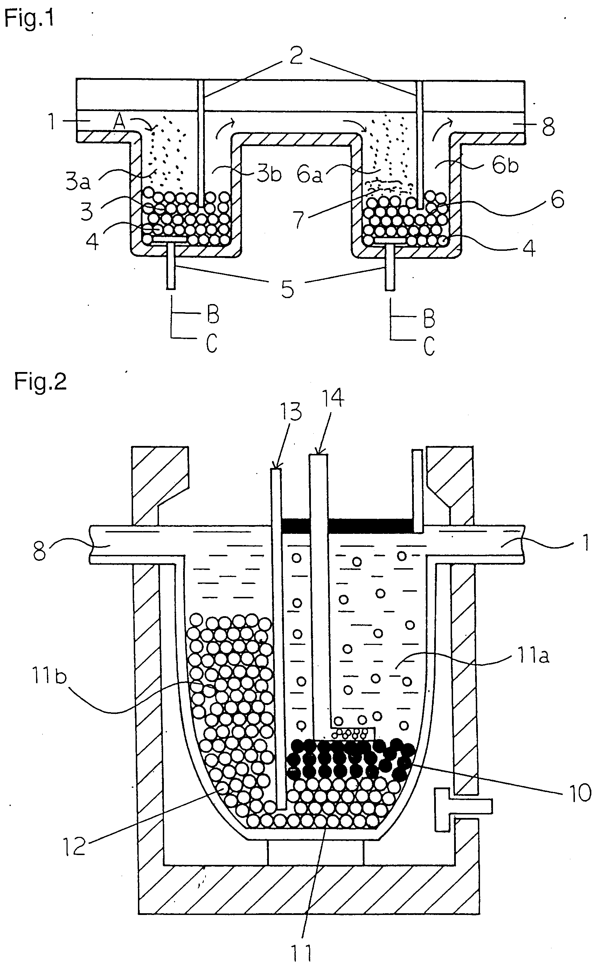

For example, thin plates or foils of aluminum can be manufactured by first casting an aluminum hot melt into ingot, and then rolling this ingot. However, solid impurities such as metal oxides and fine pieces of a refectory contained in the aluminum hot melt are directly introduced into the ingot sometimes, so that pinholes and surface imperfections occur in the course of the manufacture of the thin plates, the foils or the like by rolling the ingot. In order to prevent these troubles, it is necessary to remove the solid impurities from the metal hot melt, and as means for this prevention, various hot melt treatment methods have been heretofore developed. Among such methods, there are known hot melt treatment techniques in which alumina balls shown in Figs. 1 and 2 are utilized.

Fig. 1 shows one embodiment of a device for use in the hot melt treatment process using the alumina balls, and this is a two-step device having two hot melt treatment chambers.

An aluminum hot melt A is introduced into a first treatment chamber 3 through an inlet 1, and then brought into contact with alumina balls 4 filled into the first treatment chamber 3 to collect solid impurities (contaminants) in the aluminum hot melt A. This first treatment chamber 3 is divided by a partition 2 into a pretreatment chamber 3a in which the aluminum hot melt A is first subjected to a contact treatment and an after-treatment chamber 3b in which the aluminum hot melt A is then brought into contact with the alumina balls 4 at the time of its discharge. An argon gas B and a nitrogen gas C are fed into the pretreatment chamber 3a through a blow nozzle 5 provided through the bottom of the pretreatment chamber 3a so as to remove gases contained in the aluminum hot melt A therefrom. The aluminum hot melt A which has been treated in the first treatment chamber 3 in this way is then introduced into a second treatment chamber 6. This second treatment chamber 6 has the same constitution as in the first treatment chamber 3, and in the second chamber 6, about the same treatment as in the first treatment chamber 3 is carried out. However, in a pretreatment chamber 6a of the second treatment chamber 6, a flaky alumina 7 is put on the alumina balls 4 to effectively remove sodium and the like contained in the aluminum hot melt A. Reference numeral 8 is an outlet of the aluminum hot melt.

Fig. 2 shows one embodiment of another device for use in the hot melt treatment process using the alumina balls, and this is a one-step treatment device having one hot melt treatment chamber, which is different from the device shown in Fig. 1. Furthermore, flux-coated alumina balls 10 are put on alumina balls 12 in a pretreatment chamber 11a in a hot melt treatment chamber 11, instead of the flaky alumina. Except of these differences, the device in Fig. 2 is about the same treatment device as in Fig. 1. Reference numerals 13 and 14 are a partition and a nitrogen gas injection pipe, respectively.

In both of the hot melt treatment devices shown in Figs. 1 and 2, the alumina balls are used as filter media. The performance of the filter media of collecting the contaminants in the aluminum hot melt is lower as compared with a tubular filter, but as described above, the employment of the alumina balls can lead to an advantageous effect of the gases and sodium removal.

However, the filled alumina balls are not fixed, and so there is a problem that the once collected contaminants are easily separated from the alumina balls and then diffused into the hot melt again by a change of a flow rate of the hot melt or an impact to the device from the outside.

### SUMMARY OF THE INVENTION

Thus, the present inventors have intensively researched in order to solve the above-mentioned problems, and it has been found that the filter performance of the alumina balls filter medium can be improved by precipitating needle-shaped crystals on the surfaces of the alumina balls. In consequence, the present-invention has now been completed.

That is to say, according to the present invention, there is provided a filter medium for a metal hot melt comprising discrete ceramic balls and needle-shaped crystals precipitated on the surfaces of the discrete ceramic balls. Calcined crystals are preferred.

In this case, a preferable material for the needle-shaped crystals is 9Al₂O₃.2B₂O₃ or 3Al₂O₃.2SiO₂, but other suitable materials may be employed.

Furthermore, according to the present invention, there is provided a treatment process of a metal hot melt which comprises the steps of using discrete ceramic balls on the surfaces of which needle-shaped crystals are precipitated, and bringing the metal hot melt into contact with the ceramic balls.

### BRIEF DESCRIPTION OF THE DRAWINGS

Fig. 1 shows one embodiment of a device for use in a hot melt treatment process using the alumina balls.

Fig. 2 shows one embodiment of another device for use in the hot melt treatment process using the alumina balls.

### DETAILED DESCRIPTION OF THE INVENTION

A filter medium for a metal hot melt of the present invention can be prepared by precipitating needle-shaped crystals on the surfaces of ceramic balls such as alumina balls.

As the composition of the needle-shaped crystals which are precipitated on the surfaces of the ceramic fillers, there can be used 9Al₂O₃·2B₂O₃ or 3Al₂O₃·2SiO₂, but in view of a reactivity with SiO₂ in the case that aluminum hot melt is used as the metal hot melt, 9Al₂O₃·2B₂O₃ is particularly preferable. In addition, if the crystals are too long, the crystals are liable to be separated from the ceramic balls when the ceramic fillers are filled into a device, whereby the metal hot melt is contaminated therewith. Therefore, the length of the crystals is preferably 50µm or less, preferably at least 10µm.

The ceramic balls preferably have a diameter of about 10 to 20 mm from the viewpoints of filling properties and handling properties. The size of the ceramic balls can also be changed in consideration of the size of a treatment chamber and a collection performance.

No particular restriction is put on the material of the ceramic balls, but high-purity alumina is preferable in the case that aluminum hot melt is treated.

Moreover, in order to improve the contaminants collecting performance in the hot melt treatment process using the ceramic balls, the following factors should be considered:
(1) Decreasing a diameter of the ceramic balls to be filled,
(2) expanding a diameter distribution of the ceramic balls to be filled,
(3) thickening a filling layer of the ceramic balls, and
(4) using two or more layers consisting of the ceramic balls having different diameters.

Next, one embodiment of a manufacturing process of the filter medium for the metal hot melt of the present invention will be described.

In the first place, ceramic balls such as alumina balls are immersed into a slurry solution having a predetermined composition. After the immersion, the ceramic balls are pulled up, dried, and then calcined to obtain the filter medium for the metal hot melt in which needle-shaped crystals are precipitated on the surfaces of the ceramic balls and which contains the ceramic balls as a fundamental material.

Here, as the crystals which are precipitated on the surfaces of the ceramic balls, 9Al₂O₃·2B₂O₃ is preferable, but in this case, the slurry solution into which the ceramic balls are immersed is required to possess the predetermined composition. That is to say, the slurry solution having the predetermined composition can be prepared by adding water and an organic binder to a material having a composition of 15-80 wt% of B₂O₃, 2-60 wt% of Al₂O₃, 0-30 wt% of CaO, 5-50 wt% of MgO and 0-30 wt% of SiO₂. The material having the above-mentioned composition may be a raw material, but a fritted (vitrified) material is more preferable, because when the fritted material is used, a uniform melting state can be obtained on the surfaces of the ceramic balls at the time of the calcination to accelerate the crystallization.

In the composition of the slurry solution, 15-80 wt% of B₂O₃ and 2-60 wt% of Al₂O₃ are contained, and so a calcination·crystal precipitation temperature can be set to 1,400°C or less. From the viewpoint of the fact that B₂O₃ can improve anticorrosion to the metal hot melt such as aluminum hot melt, it is preferred that 15 wt% or more of B₂O₃ is contained. If the amount of B₂O₃ is in excess of 80 wt%, the viscosity of the slurry solution inconveniently drops at the time of the calcination·crystal precipitation. CaO and MgO are used to adjust the melting temperature and the viscosity of the crystal precipitation material to suitable ranges.

Furthermore, the above-mentioned slurry solution contains 0-30 wt% of SiO₂. When SiO₂ is contained, the wetting properties of the slurry solution to a metal hot melt such as the aluminum hot melt are improved, and a flow rate of the metal hot melt can be increased. If the amount of SiO₂ is in excess of 30 wt%, free silicon inconveniently tends to dissolve in the metal hot melt.

After immersed into the above-mentioned slurry solution, the ceramic balls are pulled up, dried, and then calcined at a temperature of 1,000°C or more. The calcination temperature is preferably in the range of 1,000 to 1,400°C. If the calcination temperature is less than 1,000°C, the precipitation of the crystals is incomplete, and if it is more than 1,400°C, the vaporization amount of B₂O₃ increases inconveniently. At the time of the calcination, it is preferred that a cooling rate of the balls is in the range of 30 to 70°C/hr. If the cooling rate of the balls is more than 70°C/hr, the crystallization of 9Al₂O₃·2B₂O₃ is not sufficiently carried out, and conversely, if it is less than 30°C/hr, the excessively long crystals having a length of more than 50 µm are formed, and a long time is taken for the cooling, which might cause a problem of productivity.

As described above, according to the present invention, the needle-shaped crystals are precipitated and applied on the surfaces of the ceramic balls. Thus, a specific surface area of the ceramic balls for contact with the aluminum hot melt remarkably increases, so that the ceramic balls can be improved in the performance of collecting contaminants such as solid impurities contained in the aluminum hot melt, and the once collected contaminants can be prevented from dissolving again. Consequently, for example, in the case that the aluminum hot melt is used as the metal hot melt, the present invention can provide the filter medium for the metal hot melt which can improve the filter performance of the ceramic balls, and the treatment process for the metal hot melt.

Next, the present invention will be described in more detail with reference to examples, but the scope of the present invention should not be limited to these examples.

### Example 1

Calcined alumina was formed into a spherical shape having a diameter of about 15 mm by a rounding device, and the thus formed alumina grains were then sintered at 1,700°C to prepare alumina balls. On the other hand, slurry solutions of various compositions shown in Table 1 were prepared. Next, the alumina balls were immersed in each slurry solution at ordinary temperature under atmospheric pressure for 15 minutes, and then pulled up. After the excess slurry was removed therefrom, and the alumina balls were then dried at 70°C. After the drying, they were calcined at each temperature shown in Table 1 for 5 hours, and then cooled at each cooling rate shown in Table 1 to prepare filter media Nos. 1 to 12 for the metal hot melt in which needle-shaped crystals of 9Al₂O₃·2B₂O₃ were precipitated on the surfaces of the alumina balls. In this connection, the filter medium No. 13 was alumina balls on which any crystals were not precipitated.

For the thus obtained filter media, crystallinity was determined from a ratio of the peak of 9Al₂O₃·2B₂O₃ to the peak of α-Al₂O₃ by X-ray diffraction, and the length of the crystals was measured by a scanning electron microscope (SEM). The results are shown in Table 1.

Next, the obtained filter medium was filled as thick as 150 mm into a vessel which was similar to a first treatment chamber shown in Fig. 1 and which had an outer wall made of an Si₃N₄-bonded SiC, and an aluminum hot melt of JIS 1050 to which TiB₂ was beforehand added was passed through the filter medium. In this case, boron in the aluminum hot melt was analyzed before and after the passage through the filter medium to calculate a boron removal ratio. The results are set forth in Table 1. Examples 3, 4, 7 and 8 show low crystallinity and short crystals. Crystallinity of 50% or more is preferred.

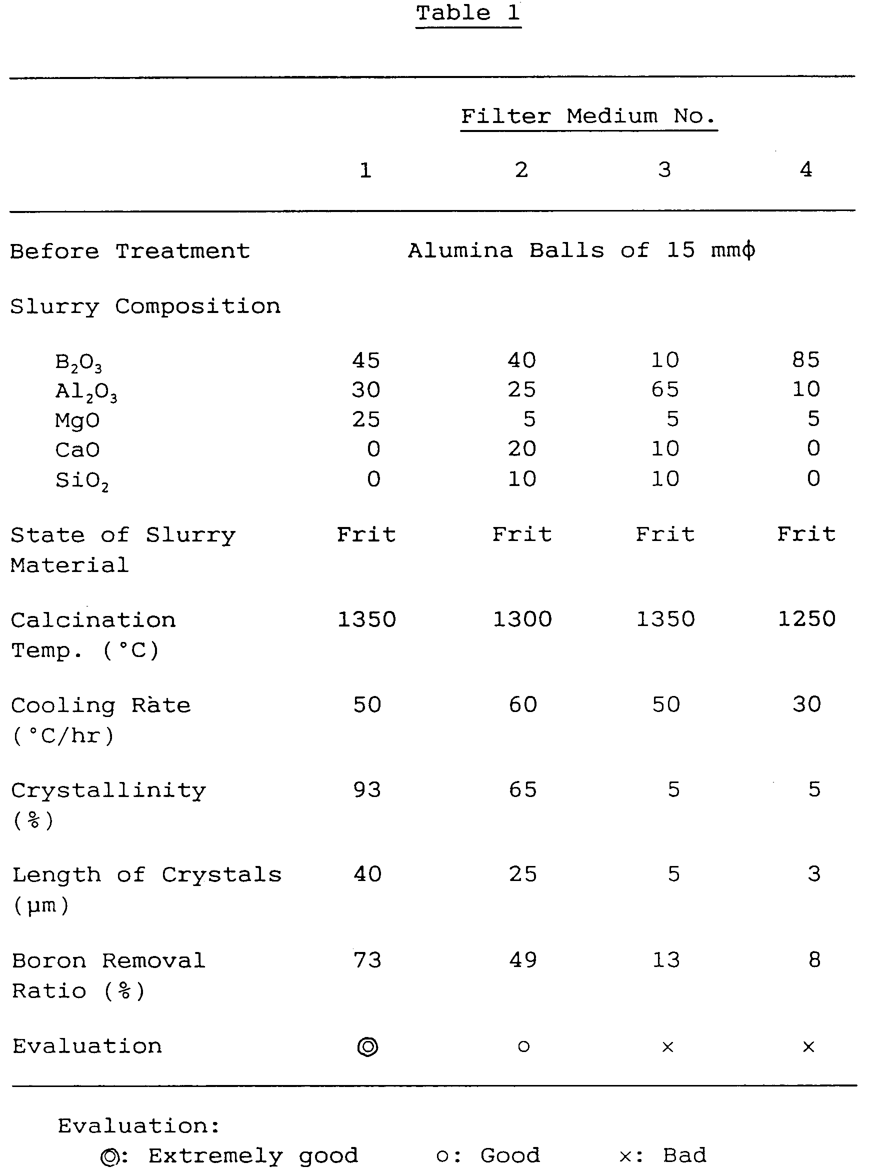

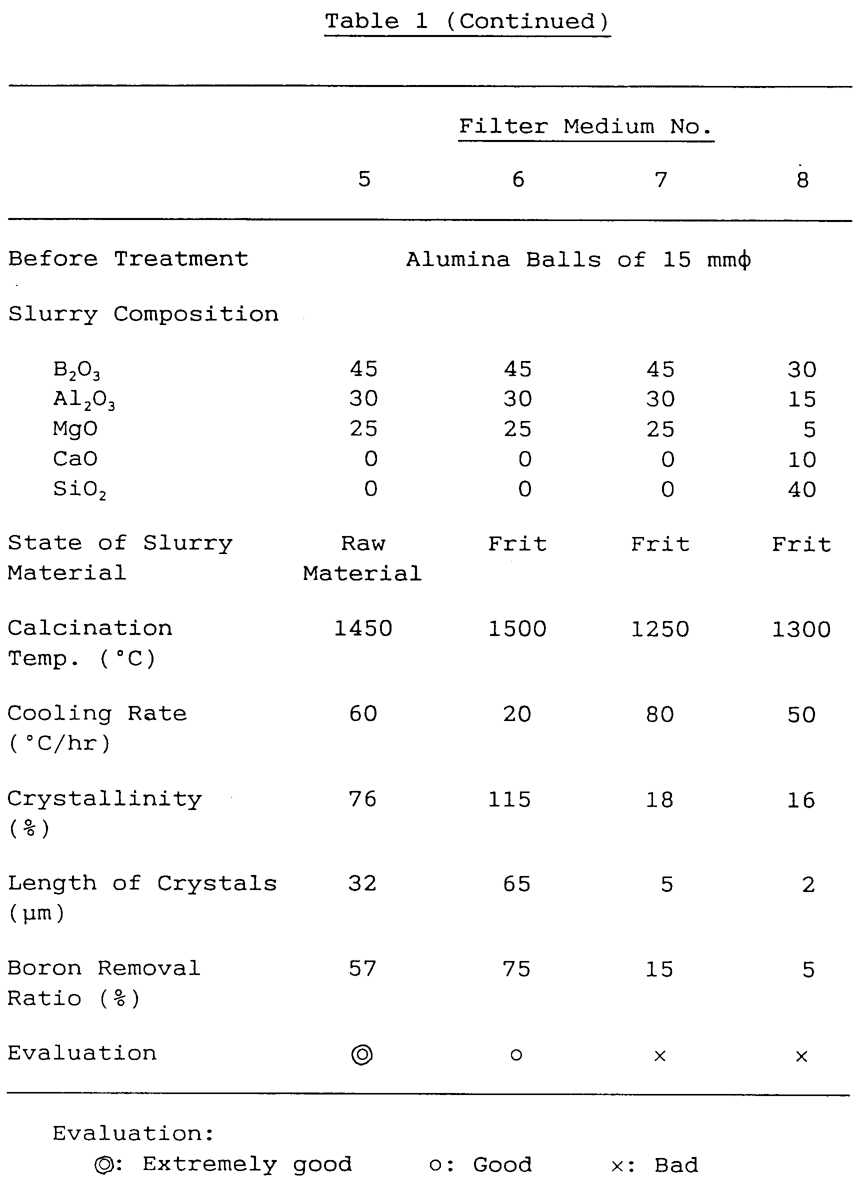

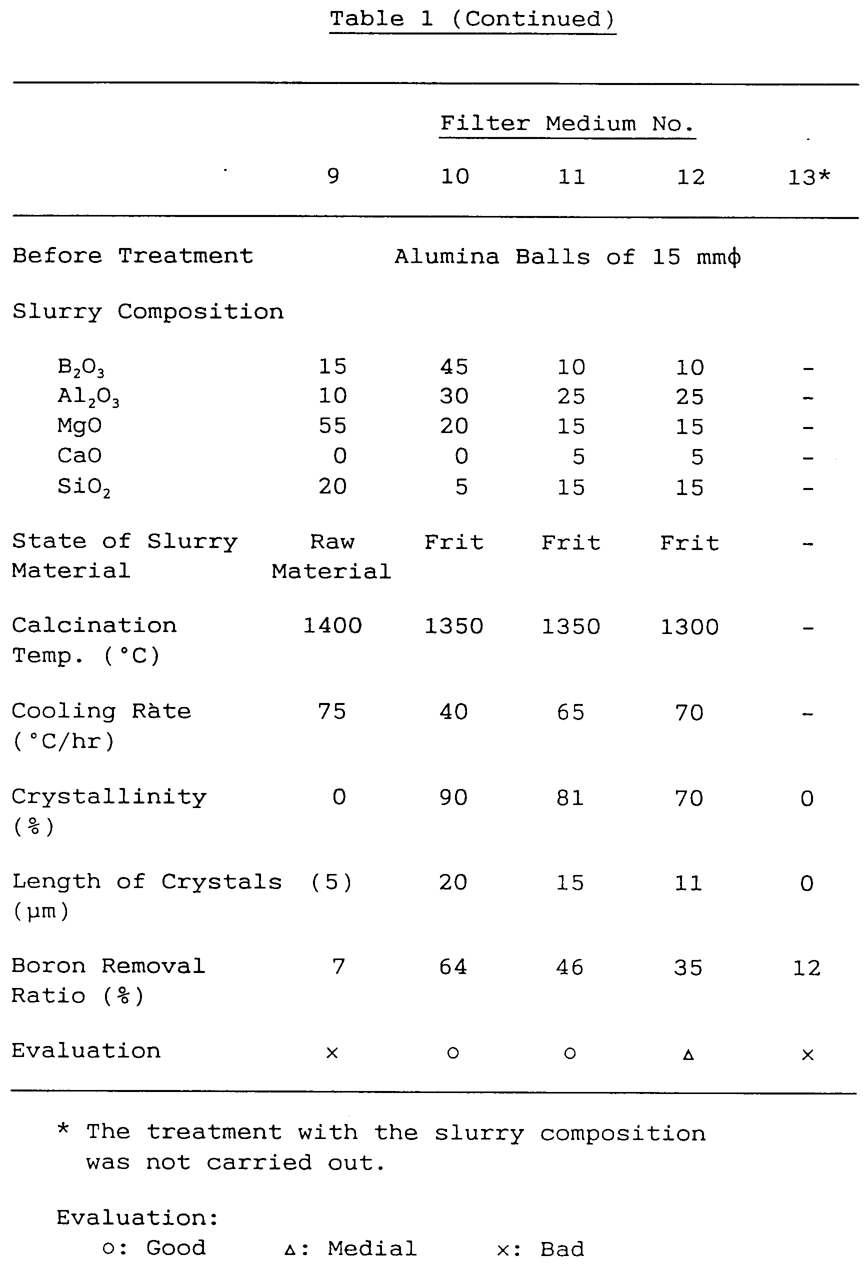

In the case of the filter medium No. 6, it was confirmed that the crystals were present in the aluminum hot melt treated. However, this medium is sufficiently applicable, if the aluminum hot melt treated at an early stage is discarded. Additionally, in the case of the filter medium No. 9, the crystals precipitated on the surfaces of the alumina balls were not 9Al₂O₃·2B₂O₃ but other crystals (MgO·9Al₂O₃).

### Example 2

A composition comprising 40 wt% of sintered alumina, 50 wt% of andalusite and 10 wt% of clay was sprayed and applied onto the surfaces of the dry spherical alumina grains of Example 1, and the grains were then calcined at 1,650°C for 5 hours.

According the evaluation of the obtained calcined products, it was confirmed that crystals having a length of about 10 µm were numerously present on the surfaces of the calcined spherical alumina grains. Furthermore, it was elucidated by X-ray diffraction that the crystals were mullite.

For the calcined spherical alumina grains, a boron removal ratio was calculated in the same manner as in Example 1, and as a result, it was 37%.

As is apparent from the above-mentioned examples, it is apparent that the filter medium of the present invention is excellent in the performance of removing the contaminants from the aluminum hot melt in the case that it is filtered.

## Claims

1. A filter medium for a metal hot melt comprising discrete ceramic balls and needle-shaped crystals precipitated on the surfaces of said discrete ceramic balls.

2. The filter medium for a metal hot melt according to Claim 1 wherein the needle-shaped crystals are 9Al₂O₃·2B₂O₃ or 3Al₂O₃·2SiO₂.

3. The filter medium for a metal hot melt according to claim 1 or 2 wherein the needle-shaped crystals have a length of 50 µm or less.

4. The filter medium for a metal hot melt according to claim 1,2 or 3 wherein the ceramic balls are made of alumina.

5. The filter medium for a metal hot melt according to Claim 1 wherein the ceramic balls have a diameter of 10 to 20 mm.

6. A treatment process of a metal hot melt which comprises the steps of using discrete ceramic balls on the surfaces of which needle-shaped crystals are precipitated, and bringing the metal hot melt into contact with the ceramic balls.

7. The treatment process of a metal hot melt according to Claim 6 wherein the needle-shaped crystals are 9Al₂O₃·2B₂O₃ or 3Al₂O₃·2SiO₂.

8. The treatment process of a metal hot melt according to claim 6 or 7 wherein the needle-shaped crystals have a length of 50 µm or less.

9. The treatment process of a metal hot melt according to claim 6, 7 or 8 wherein the ceramic balls are made of alumina.

10. The treatment process of a metal hot melt according to Claim 6 wherein the ceramic balls have a diameter of 10 to 20 mm.

## Patentansprüche

1. Filtermedium für eine Metall-Heißschmelze, umfassend einzelne Keramikkugeln und auf den Oberflächen der einzelnen Keramikkugeln ausgefällte, nadelförmige Kristalle.

2. Filtermedium für eine Metall-Heißschmelze nach Anspruch 1, worin die nadelförmigen Kristalle 9Al₂O₃·2B₂O₃ oder 3Al₂O₃·2SiO₂ sind.

3. Filtermedium für eine Metall-Heißschmelze nach Anspruch 1 oder 2, worin die nadelförmigen Kristalle eine Länge von 50 µm oder weniger aufweisen.

4. Filtermedium für eine Metall-Heißschmelze nach einem der Ansprüche 1, 2 oder 3, worin die Keramikkugeln aus Aluminiumoxid bestehen.

5. Filtermedium für eine Metall-Heißschmelze nach Anspruch 1, worin die Keramikkugeln einen Durchmesser von 10 bis 20 mm aufweisen.

6. Behandlungsverfahren für eine Metall-Heißschmelze, welches die Schritte der Verwendung einzelner Keramikkugeln, an deren Oberflächen nadelförmige Kristalle ausgefällt sind, und des In-Kontakt-Bringens der Metall-Heißschmelze mit den Keramikkugeln umfaßt.

7. Behandlungsverfahren für eine Metall-Heißschmelze nach Anspruch 6, worin die nadelförmigen Kristalle 9Al₂O₃·2B₂O₃ oder 3Al₂O₃·2SiO₂ sind.

8. Behandlungsverfahren für eine Metall-Heißschmelze nach Anspruch 6 oder 7, worin die nadelförmigen Kristalle eine Länge von 50 µm oder weniger aufweisen.

9. Behandlungsverfahren für eine Metall-Heißschmelze nach einem der Ansprüche 6, 7 oder 8, worin die Keramikkugeln aus Aluminiumoxid bestehen.

10. Behandlungsverfahren für eine Metall-Heißschmelze nach Anspruch 6, worin die Keramikkugeln einen Durchmesser von 10 bis 20 mm aufweisen.

## Revendications

1. Milieu de filtre pour un métal fondu chaud comprenant des balles discrètes de céramique et des cristaux en forme d'aiguille précipités sur les surfaces desdites balles discrètes de céramique.

2. Milieu de filtre pour un métal fondu chaud selon la revendication 1 dans lequel les cristaux en forme d'aiguille sont 9Al₂O₃.2B₂O₃ ou 3Al₂O₃.2SiO₂.

3. Milieu de filtre pour un métal fondu chaud selon la revendication 1 ou 2, dans lequel les cristaux en forme d'aiguille ont une longueur de 50 µm ou moins.

4. Milieu de filtre pour un métal chaud fondu selon la revendication 1, 2 ou 3 dans lequel les balles de céramique sont faites d'alumine.

5. Milieu de filtre pour un métal fondu chaud selon la revendication 1 dans lequel les balles de céramique ont un diamètre de 10 à 20 mm.

6. Procédé de traitement d'un métal fondu chaud qui comprend les étapes de : utiliser des balles discrètes de céramique sur les surfaces desquelles des cristaux en forme d'aiguille sont précipités, et amener le métal chaud fondu en contact avec les balles de céramique.

7. Procédé de traitement d'un métal chaud fondu selon la revendication 6 dans lequel les cristaux en forme d'aiguille sont 9Al₂O₃.2B₂O₃ ou 3Al₂O₃.2SiO₂.

8. Procédé de traitement d'un métal chaud fondu selon la revendication 6 ou 7 dans lequel les cristaux en forme d'aiguille ont une longueur de 50 µm ou moins.

9. Procédé de traitement d'un métal chaud fondu selon la revendication 6, 7, ou 8 dans lequel les balles de céramique sont faites d'alumine.

10. Procédé de traitement d'un métal chaud fondu selon la revendication 6 dans lequel les balles de céramique ont un diamètre de 10 à 20 mm.
